Europäisches Patentamt

European Patent Office

Office européen des brevets

(11) Veröffentlichungsnummer: **0 199 070**
**B1**

# (12) EUROPÄISCHE PATENTSCHRIFT

(45) Veröffentlichungstag der Patentschrift:
**19.07.89**

(21) Anmeldenummer: **86103503.8**

(22) Anmeldetag: **14.03.86**

(51) Int. Cl.⁴: **C04B 18/26**

(54) Verfahren zur Herstellung von Formteilen.

(30) Priorität: **22.03.85 CH 1284/85**

(43) Veröffentlichungstag der Anmeldung:
**29.10.86 Patentblatt 86/44**

(45) Bekanntmachung des Hinweises auf die Patenterteilung:
**19.07.89 Patentblatt 89/29**

(84) Benannte Vertragsstaaten:
**AT BE CH DE FR GB IT LI NL SE**

(56) Entgegenhaltungen:
EP-A- 0 034 801
WO-A- 85/03700
DE-A- 2 737 058
DE-C- 323 080
DE-C- 852 366
NL-A- 7 512 625

(73) Patentinhaber: **AMETEX AG, Eternitstrasse 3,
CH-8867 Niederurnen(CH)**
(84) Benannte Vertragsstaaten: **CH DE LI SE**

(73) Patentinhaber: **REDCO SA,
B-2920 Kapelle-op-den-Bos(BE)**
(84) Benannte Vertragsstaaten: **BE GB NL**

(73) Patentinhaber: **S.A. Financière Eternit, 33, rue d'Artois,
F-75008 Paris(FR)**
(84) Benannte Vertragsstaaten: **FR IT**

(73) Patentinhaber: **Eternit-Werke Ludwig Hatschek AG,
A-4840 Vöcklabruck(AT)**
(84) Benannte Vertragsstaaten: **AT**

(72) Erfinder: **Hofmann, Hans, Langfeld 6,
CH-8722 Kaltbrunn(CH)**
Erfinder: **Meier, Ottokar, Farbwiesstrasse,
CH-8867 Niederurnen(CH)**
Erfinder: **Mühlethaler, Walter, Boverie 17,
C-1530 Payerne(CH)**
Erfinder: **Spiess, Hansueli, Fly, CH-8872 Weesen(CH)**

(74) Vertreter: **Scheidegger, Zwicky, Werner & Co.,
Stampfenbachstrasse 48 Postfach, CH-8023 Zürich(CH)**

**Beschreibung**

Die vorliegende Erfindung betrifft ein Verfahren zur Herstellung von Formteilen, insbesondere Bauplatten, aus mit Holzfasern armiertem, hydraulisch abbindbarem Material.

Es sind seit langem Formteile, insbesondere Platten aus zementgebundenem Material bekannt, welche Holz- oder Zellulosefasern als Armierung enthalten.

Die herkömmlichen Holz-Zementprodukte weisen einen ausserordentlich hohen Holzanteil von etwa 25-40 Gew.-% auf. Dabei sind die verwendeten Holzfasern verhältnismässig sehr grob (Holzspäne). Dabei wird ein Teil der verwendeten Holzfasern in sehr grober Form für die Herstellung der mittleren Schicht der Platte verwendet, während für die Deckschicht feinere Fasern eingesetzt werden. Zudem müssen die so hergestellten Platten zusätzlich noch einer Langzeitpressung unterzogen werden. Dies verhinderte bisher eine wirtschaftliche Herstellung, insbesondere von relativ dünnwandigen Produkten mit guten Festigkeitseigenschaften, insbesondere mit gutem Langzeitverhalten.

Ferner ist aus der DE-OS 30 07 012 eine Bauplatte bekannt, welche aus einem Faser-Bindemittel-Gemisch aus Holzspähnen und Zement unter Zusatz von Chemikalien hergestellt ist, wobei neben den Holzspänen noch zusätzliche Bewehrungsfasern (Glasfasern, Zellulosefasern, synthetische Fasern, Steinwollfasern) zur Erhöhung der Biegefestigkeit eingesetzt wurden. Die Herstellung erfolgte im Langfilzverfahren, welches erlaubte, die zusätzlichen Bewehrungsfasern auszurichten.

Eine Bauplatte nur mit Holzfasern zu bewehren und eine ausreichende Biegefestigkeit zu erreichen wurde dabei für ausgeschlossen gehalten.

Obwohl dieses Verfahren relativ einfach erscheint, müssen für solche bekannten Bauplatten neben den billigen Holzfasern noch zusätzliche teure Bewehrungsfasern eingesetzt werden.

Zweck der vorliegenden Erfindung ist somit die Schaffung eines Verfahrens zur Herstellung von Formteilen unter Verwendung von praktisch überall vorhandenen Materialien, nämlich Zement und Armierungsfasern aus Holz, wobei die Bereitstellung keine aufwendigen Vorbehandlungen bedingt, und die Herstellung wirtschaftlich erfolgen kann. Die entstehenden Produkte sollen dabei optimale Festigkeitswerte erlangen.

Das erfindungsgemässe Verfahren zur Herstellung von Formteilen aus hydraulisch abbindendem Material wie Zement, Gips, Kalk, das mit Holzfasern armiert ist, zeichnet sich dadurch aus, dass dem Bindemittel höchstens 15 Gew.-%, bezogen auf das Mischungsgewicht, armierende Holzfasern und/oder Holzfaserbündel sowie Wasser beigemischt werden, und das Ganze auf Entwässerungsmaschinen im Wickelverfahren zu Platten verarbeitet wird.

In gewissen Fällen kann es von Vorteil sein, neben den armierenden Holzfasern noch weitere organische Fasern einzusetzen, beispielsweise um spezifische Eigenschaften des Produktes zu modifizieren, wie z.B. Dilatationsverhalten, Porosität, oder um besonderen Festigkeitsanforderungen zu genügen.

Vorzugsweise wird mit Holzfasern mit verschiedenen Feinheiten gearbeitet.

Die vorzugsweise verwendeten Holzfasern haben beispielsweise eine Länge von 0,3-15mm und einen mittleren Durchmesser von 10-500 µm, je nach Art des eingesetzten Holzes und des angewendeten Defibrillierungsverfahrens.

Vor dem Erhärten können die erfindungsgemäss hergestellten Platten einer beliebigen Formgebung unterzogen werden (z.B. Bildung von Wellplatten).

Diese Herstellungsart ist ausserordentlich wirtschaftlich, insbesondere bei der Bildung von relativ dünnwandigen Platten.

Dank dem Einsatz einer relativ grossen Wassermenge, welche zur Bildung der Grundmasse dient, entsteht eine gleichmässige Mischung und Verteilung der Holzfasern. Damit ist eine Grundvoraussetzung für die geforderten Festigkeitswerte geschaffen. Durch die Herstellung der Formteile auf Entwässerungsmaschinen im Wickelverfahren, d.h. durch Uebereinanderlagern einer Mehrzahl von Materiallagen, von denen jede für sich relativ dünn ist, kann die in der Grundmasse vorhandene optimale Faserverteilung beibehalten und somit die gewünschte Festigkeit (Biegezugfestigkeit) der Endprodukte mit hervorragendem Alterungsverhalten gewährleistet werden.

Das Ganze erlaubt überraschenderweise mit einem grossen Holzfaseranteil zu arbeiten (mit eventuellen Prozessfasern als Zementrückhalt in der Matrix), d.h. ohne teure Zusatzfasern.

Durch den erfindungsgemässen Einsatz der Holzfaserbündel werden, neben den preislichen Vorteilen, die nachstehenden wesentlichen Verbesserungen gegenüber Faserzementprodukten mit chemisch aufgeschlossenen Zellstoffen erzielt:
- eine wesentlich geringere Versprödung
- eine hohe Langzeitbeständigkeit der Holzfaser in der Matrix des ganzen Gebildes
- eine wesentlich bessere Einbindung in der Matrix im Vergleich zu den üblicherweise verwendeten chemisch aufgeschlossenen Zellstoffen
- eine höhere Zähigkeit

Ein erfindungsgemäss hergestelltes Formteil weist üblicherweise etwa 7 Gew.-% Holzfasern, davon ca. 60-80% grobe und 20-40% feine, und 90 Gew.-% Bindemittel und Zuschlagstoffe auf.

Feine Fasern sind im vorliegendem Fall solche, welche eine Feinheit entsprechend Sieb mit Maschenzahl über 100 aufweisen, grobe Fasern solche mit Feinheit eines Siebes mit Maschenzahl unter 100.

Die Erfindung wird nachstehend anhand von Beispielen noch etwas näher erläutert.

2

EP 0 199 070 B1

Versuchsbeispiel

Auf einer Hatschekmaschine wurden gepresste Platten aus folgenden zwei Mischungen hergestellt und während 28 Tagen in einer Feuchtekammer bei 100% rel. Feuchtigkeit bei 25°C aushärten gelassen:

| Mischungsbestandteile | erfindungsgemäße Mischung A | Vergleichs- mischung B |
|---|---|---|
| CTMP-Holzschliff | 6% | — |
| Eucalyptus-Sulfatzellstoff | — | 6% |
| Portlandzement | 74% | 74% |
| Kalksteinmehl | 20% | 20% |

Die erfindungsgemäss eingesetzte Mischung wurde etwa wie folgt zubereitet:
80 kg CTMP-Holzschliff (CTMP = Chemical-thermo-mechanical pulp) wurden in 1 m³ Wasser mit 20 kg Aluminiumsulfat während 10 Min. in einem Solvopulper gepulpt.
Der Holzschliff zeigte nach der Bauer-Mc-Nett-Siebanalyse folgende Fraktionen:

| Fraktion | Sieb Maschenweite bzw. | Siebzahl nach ASTM |
|---|---|---|
| 34,8% | 1,41 mm | (14 M) |
| 35,5% | 0,50 mm | (35 M) |
| 12,3% | 0,15 mm | (100 M) |
| 3,6% | 0,07 mm | (200 M) |
| 13,8% | < 0,07 mm | (> 200 M) |

(Die Siebzahl, z.B. 100 M, bezieht sich nach ASTM-Norm auf ein Sieb mit entsprechender Maschenzahl pro Quadrat-Zoll).

Nach dem Umpumpen der Faseraufschlämmung in einen Horizontalmischer wurde mit 2 m³ Wasser weiter verdünnt und 720 kg Portlandzement und 180 kg Kalksteinmehl zugefügt. Nach einer Mischzeit von 10 Min. wurde die Aufschlämmung über eine Rührbütte der Hatschekmaschine zugefügt, wobei noch zusätzlich 80 ppm eines Polyacrylamides zudosiert wurden. Auf der Maschine wurden mit sieben Umdrehungen der Formatwalze Platten von 6 mm hergestellt. Die Hälfte der Platten wurden zwischen geölten Blechen während 45 Min. in einer Stapelpresse bei einem spezifischen Pressdruck von 250 bar auf eine Dicke von 4,9 mm gepresst.

Nach der Aushärtung der Proben wurden diese einer beschleunigten Alterung unterworfen. Dieser Alterungstest bestand in folgenden Zyklen:
3 Std aufheizen mittels JR-Lampen, trocken bis 80°C
9 Std JR-Lampen, trocken bei 80°C
3 Std Abkühlung, trocken bis 25°C
9 Std unter Wasser bei 25°C

Nach 1, 3, 6 und 12 Monaten wurden Proben gezogen und an diesen Platten die bruchmechanischen Daten im Wasser gesättigten Zustand bestimmt. Die in Tabelle II zusammengestellten Resultate zeigen, dass die Platten mit den erfindungsgemässen Holzfasern (Mischung A) eine ausgezeichnete Alterungs- und Langzeitbeständigkeit aufweisen, während die Platten mit dem Sulfatzellstoff über ein Jahr stark verspröden und schon deutliche Festigkeitseinbussen erleiden.

Die nachstehende Tabelle zeigt dabei die festgestellten Werte.

3

| Alterungsperiode | Biegezug-festigkeit N/mm$^2$ | B014harbeit kJ/m$^2$ | Dichte g/ccm | Wasser-aufnahme % |
|---|---|---|---|---|
| **Mischung A. Holzfasern** (erfindungsgemäß) | | | | |
| Ausgangswert | 21,2 | 1,21 | 1,804 | 23,0 |
| 1 Mt. | 20,1 | 1,03 | 1,827 | 22,7 |
| 3 Mte. | 21,0 | 1,10 | 1,861 | 22,2 |
| 6 Mte. | 21,4 | 1,00 | 1,874 | 22,0 |
| 12 Mte. | 22,7 | 0,84 | 1,886 | 21,4 |
| **Mischung B. Zellstoff** | | | | |
| Ausgangswert | 29,1 | 2,63 | 1,860 | 21,8 |
| 1 Mt. | 21,4 | 2,11 | 1,883 | 21,5 |
| 3 Mte. | 20,0 | 1,25 | 1,897 | 21,0 |
| 6 Mte. | 18,3 | 0,98 | 1,911 | 20,7 |
| 12 Mte. | 14,7 | 0,49 | 1,971 | 20,4 |

Als typische Beispiele seien nachstehende erfindungsgemäss eingesetzte Zusammensetzungen angegeben.

**Beispiel 1**

| | |
|---|---|
| Bindemittel (Zement) | 50–90 Gew.-% |
| Füllstoffe | 5–30 Gew.-% |
| Prozessfasern | 1–8 Gew.-% |
| Holzfasern | 2–8 Gew.-% |
| übliche Abbindebedingungen | |

**Beispiel 2**

| | |
|---|---|
| Bindemittel (Zement) | 50–90 Gew.-% |
| Füllstoffe | 5–30 Gew.-% |
| Natürliche Prozessfasern | 1–8 Gew.-% |
| Armierende Holzfasern | 2–8 Gew.-% |
| übliche Abbindebedingungen | |

**Beispiel 3**

| | |
|---|---|
| Bindemittel (Zement) | 40–75 Gew.-% |
| Füllstoffe (Kalksteinmehl) | 10–25 Gew.-% |
| Amorphe Kieselsäure | 10–20 Gew.-% |
| Kalkhydrate | 0–5 Gew.-% |
| Holzfasern | 3–15 Gew.-% |
| Pressung nach Formgebung mindestens | 400 N/m$^2$ |
| unter simultaner Wärmebehandlung | 50–95°C |

Beispiel 4

| Bindemittel (Zement) | 45–65 Gew.-% |
|---|---|
| Quarzsand Blaine 2000–9000 | 30–50 Gew.-% |
| Holzfasern | 3–15 Gew.-% |
| Autoklavhärtung, beginnend 6–120 h nach erfolgter Formgebung | |
| Autoklavbedingungen 6–18 h bei 6–12 bar Dampfdruck | |

Unter Prozessfasern, auch Filterfasern genannt, sind allgemein faserige Systeme zu verstehen, welche keinen nennenswerten Beitrag zur eigentlichen Verstärkung des Zementes leisten. Die Hauptaufgabe dieser Fasern besteht darin, den Zement beim Entwässern der Faser-Zement-Aufschlämmung im Verbund zurückzuhalten.

Für das erfindungsgemässe Verfahren gegebenenfalls einzusetzende geeignete Filterfasern sind z.B. Zellulosefasern jeder Art, z.B. in Form von Chemical Pulp, Holzschliff, Altpapier, Holzmehl, zellulosehaltigen Abfällen von Müllbeseitigungsanlagen, etc. Es können aber auch Wollfasern, Seide oder "Fibride", z.B. aus Polyaethylen, verwendet werden.

Die Holzfasern können je nach Art und Einsatz der Formteile, der Art des Holzes und der Verarbeitung chemisch oder physikalisch vorbehandelt werden.

Unter chemischer Vorbehandlung versteht man z.B. die Mineralisierung der Holzfasern mittels Aluminium Sulfat zwecks Verbesserung der Zementabbindung, Verbesserung des Verbundes zwischen Matrix und Fasern wie auch des Brandverhaltens. Eine physikalische Vorbehandlung der Fasern durch Wärme bezweckt die Reduktion des Quellvermögens.

**Patentansprüche**

1. Verfahren zur Herstellung von Formteilen, insbesondere Bauplatten, aus mit Holzfasern armiertem, hydraulisch abbindendem Material, wobei dem Bindemittel höchstens 15 Gew.-%, bezogen auf das Trockengewicht der Mischung, armierende Holzfasern und/oder Holzfaserbündel sowie Wasser beigemischt werden und das Ganze auf Entwässerungsmaschinen im Wickelverfahren zu Platten verarbeitet wird.

2. Verfahren nach Anspruch 1, dadurch gekennzeichnet, dass die Verarbeitung im Hatscheck- oder im Flow-on-Verfahren erfolgt.

3. Verfahren nach Anspruch 1-2, dadurch gekennzeichnet, dass der Wasseranteil bezogen auf das Trockengewicht der Mischung mindestens 300 Gew.-%, vorzugsweise mindestens 400 Gew.-% beträgt.

4. Verfahren nach Anspruch 1-3, dadurch gekennzeichnet, dass sich der Holzfaseranteil aus etwa 60-80% groben Fasern und etwa 20-40% feinen Fasern zusammensetzt.

5. Verfahren nach Anspruch 1-4, dadurch gekennzeichnet, dass die Holzfasern eine Länge zwischen etwa 0,3-15 mm, vorzugsweise 0,5-6 mm und einen mittleren Durchmesser von etwa 10-500 µm aufweisen.

6. Verfahren nach Anspruch 1-5, dadurch gekennzeichnet, dass der Mischung neben dem eigentlichen Bindemittel noch Füllstoffe, wie beispielsweise Kalksteinmehl, Asche, Schlacke oder Sand zugefügt werden.

7. Verfahren nach Anspruch 1-6 dadurch gekennzeichnet, dass neben den armierenden Holzfasern noch natürliche oder synthetische Feinfasern als Prozessfasern eingesetzt werden.

8. Verfahren nach Anspruch 1-7, dadurch gekennzeichnet, dass neben den armierenden Holzfasern noch weitere organische Fasern eingesetzt werden.

9. Verfahren nach Anspruch 1-8, dadurch gekennzeichnet, dass eine Mischung folgender Zusammensetzung verwendet wird:

| Bindemittel (Zement) | 50–90 Gew.-% |
|---|---|
| Füllstoffe | 5–30 Gew.-% |
| Natürliche Prozessfasern | 1–8 Gew.-% |
| Armierende Holzfasern | 2–8 Gew.-% |

10. Verfahren nach Anspruch 1-8, dadurch gekennzeichnet, dass eine Mischung folgender Zusammensetzung verwendet wird:

| Bindemittel (Zement) | 45–65 Gew.-% |
| Quarzsand Blaine 2000–9000 | 30–50 Gew.-% |
| Holzfasern | 3–15 Gew.-% |

und die Formstücke nach erfolgter Formgebung einer Autoklavhärtung unterzogen werden.

11. Verfahren nach Anspruch 1–10, dadurch gekennzeichnet, dass die erstellten Platten vor dem Erhärten einer Formgebung, z.B. Wellung, unterzogen werden.

12. Verfahren nach Anspruch 1–11, dadurch gekennzeichnet, dass die eingesetzten Holzfasern vorgängig der Verarbeitung einer Vorbehandlung unterzogen werden.

13. Verfahren nach Anspruch 1–11, dadurch gekennzeichnet, dass jede Platte aus wenigstens 3 Wickellagen aufgebaut wird, wobei jede Lage vor dem Pressen vorzugsweise eine Dicke von höchstens 1,5mm aufweist.

14. Formteil, insbesondere Bauplatte, hergestellt nach einem der Ansprüche 1–13.

## Claims

1. A method for producing shaped elements, especially construction panels, made from wood fiber reinforced hydraulically setting material, wherein at most 15% by weight, in relation to the dry weight of the mixture, of reinforcing wood fibers and/or bundles of wood fibers, as well as water, are admixed to the binding agent and the so obtained slurry is processed into panels on dewatering equipment according to the winding layer process.

2. The method according to claim 1, characterized in that the processing is carried out according to the Hatschek method or the flow-on system.

3. The method according to claims 1 to 2, characterized in that the proportion of water, in relation to the dry weight of the mixture, is minimum 300% by weight but preferrably minimum 400% by weight.

4. The method according to claims 1 to 3, characterized in that the proportion of wood fibers is substantially composed of 60 to 80% coarse fibers and 20 to 40% of fine fibers.

5. The method according to claims 1 to 4, characterized in that said wood fibers show substantially a length of between 0,3 to 15 mm, preferably 0, to 6 mm, and an average diameter of 10 to 500 μm.

6. The method according to claims 1 to 5, characterized in that in addition to the binding agent proper, fillers such as for example limestone powder, ashes, slag or sand are admixed to the mixture.

7. The method according to claims 1 to 6, characterized in that fine natural of synthetic fibers are added as process fibers to the reinforcing wood fibers.

8. The method according to claims 1 to 7, characterized in that besides said reinforcing wood fibers additional organic fibers are employed.

9. The method according to claims 1 to 8, characterized in that a mixture of the following composition is utilized:

| binder (cement) | 50 to 90% by weight |
| filler materials | 5 to 30% by weight |
| natural process fibers | 1 to 8% by weight |
| reinforcing wood fibers | 2 to 8% by weight |

10. The method according to claims 1 to 8, characterized in that a mixture of the following composition is utilized:

| binder (cement) | 45 to 65% by weight |
| Qartz sand 2000 to 9000 Blaine | 30 to 50% by weight |
| wood fibers | 3 to 15% by weight |

and the shaped elements, after being brought into the desired form, are subjected to an autoclave hardening process.

11. The method according to claims 1 to 10, characterized in that the manufactured panels, prior to hardening, are submitted to a shaping process, for instance corrugating.

12. The method according to claims 1 to 11, characterized in that the wood fibers utilized, prior to processing, are undergoing a pre-treatment.

13. The method according to claims 1 to 11, characterized in that each panel is built-up of at least three wound layers, whereby each layer, prior to compressing, has a thickness of preferrably maximum 1,5 mm.

14. Shaped elements, particularly construction panel, manufactured according to one of the claims 1 to 13.

**Revendications**

1. Procédé de fabrication d'objets formés, notamment de panneaux de construction, en un matériau à prise hydraulique armé de fibres de bois, dans lequel on ajoute au liant au maximum 15% en poids, pris par rapport au poids à l'état sec du mélange, des fibres et/ou des ensembles de fibres d'armature ainsi que de l'eau, et on traite le tout dans des machines de déshydratation enrouleuses pour en former des panneaux.

2. Procédé selon la revendication 1, caractérisé en ce que ledit traitement est un procédé Hatschek ou un procédé dit flow-on.

3. Procédé selon les revendications 1–2, caractérisé en ce que la part en eau du mélange est au moins 300% en poids, de préférence 400% en poids, pris par rapport au poids à l'état sec du mélange.

4. Procédé selon les revendications 1–3, caractérisé en ce que la part en fibres de bois du mélange se compose d'environ 60–80% de grosses fibres et d'environ 20–40% de fines fibres.

5. Procédé selon les revendications 1–4, caractérisé en ce que les fibres de bois présentent une longueur entre environ 0,3–15 mm, de préférence 0,5–6 mm, et un diamètre moyen d'environ 10–500 μm.

6. Procédé selon les revendications 1–5, caractérisé en ce que l'on ajoute au mélange, à part du liant proprement dit, en plus des matières de charge, comme par exemple de la chaux pulvérisée, des cendres, de la scorie ou du sable.

7. Procédé selon les revendications 1–6, caractérisé en ce que l'on ajoute aux fibres de bois d'armature des fibres fines naturelles ou synthétiques comme fibres opérationelles.

8. Procédé selon les revendications 1–7, caractérisé en ce que l'on utilise à part les fibres de bois d'armature d'autres fibres organiques.

9. Procédé selon les revendications 1–8, caractérisé en ce que l'on utilise un mélange composé comme suit:

| | |
|---|---|
| liant (ciment) | 50–90% en poids |
| matières de charge | 5–30% en poids |
| fibres opérationelles naturelles | 1–8% en poids |
| fibres de bois d'armature | 2–8% en poids |

10. Procédé selon les revendications 1–8, caractérisé en ce que l'on utilise un mélange composé comme suit:

| | |
|---|---|
| liant (ciment) | 45–65% en poids |
| sable silicieux Blaine 2000–9000 | 30–50% en poids |
| fibres de bois | 3–15% en poids |

et on soumet les objets formés après leur mise en forme à un durcissement par autoclavage.

11. Procédé selon la revendication 10, caractérisé en ce que les panneaux fabriqués sont soumis, avant leur durcissement, à une mise en forme, par exemple à une ondulation.

12. Procédé selon les revendications 1–11, caractérisé en ce que les fibres de bois sont soumises, avant leur utilisation dans le procédé, à un traitement préalable.

13. Procédé selon les revendications 1–11, caractérisé en ce que chaque panneau est composé d'au moins trois couches constituées par enroulement, chaque couche présentant, avant le pressage, de préférence une épaisseur maximale de 1,5 mm.

14. Objet formé, notamment panneau de construction, fabriqué selon l'une des revendications 1–13.